# EUROPÄISCHE PATENTANMELDUNG

(11) **EP 2 562 207 A1**
(43) Veröffentlichungstag der Anmeldung: **27.02.2013**
(21) Anmeldenummer: 11179075.4
(22) Anmeldetag: 26.08.2011
(51) Int. Cl.: C08J 9/00, E04B 1/80, F16L 59/065

(54) **NANOPORÖSE POLYMERTEILCHEN ENTHALTENDE VAKUUMISOLATIONSPANEELEN**

(71) Anmelder: BASF SE, 67056 Ludwigshafen (DE)
(72) Erfinder: Die Erfindernennung liegt noch nicht vor

(57) **Zusammenfassung**

Die Erfindung betrifft eine Vakuumisolationspaneele, enthaltend ein Kernmaterial mit einer Dichte im Bereich von 50 bis 350 kg/m³, wobei das Kernmaterial eine Mischung aus
A) 30 bis 100 Gewichtsprozent nanoporösen Polymerteilchen, die eine Zellzahl im Bereich von 1.000 bis 100.000 Zellen/mm aufweisen, wobei mindestens 60 Gewichtsprozent der nanoporösen Polymerteilchen in der Siebanalyse nach DIN 66165 eine Partikelgröße von kleiner als 100 µm aufweisen, und
B) 0 bis 70 Gewichtsprozent pyrogener oder gefällter Kieselsäure enthält, sowie Verfahren zu deren Herstellung.

## Beschreibung

Die vorliegende Erfindung betrifft eine Vakuumisolationspaneele, welche nanoporöse Polymerteilchen als Kernmaterial enthalten.

Vakuumisolationspaneele (VIP) sind als hocheffiziente Dämmmaterialien bekannt. Je nach Kernmaterial und Unterdruck weisen sie mit einer Wärmleitfähigkeit von etwa 4 bis 8 mW/mK eine 8- bis 15-mal bessere Wärmdämmwirkung als konventionelle Wärmedämmsysteme aus.

Die guten Wärmedämmeigenschaften gehen jedoch verloren, wenn diese Vakuumisolationspaneele durch Beschädigungen belüftet warden. Die Isolierwirkung entspricht dann nur noch der der eingesetzten Kernmaterialien. Die Lebensdauer ist durch die Diffusion von Umgebungsgasen durch die Barrierefolie bzw. Hülle in die Vakuumpaneele, zeitlich begrenzt. Ein weiterer Nachteil heutiger Vakuumisolationspaneele ist die fehlende Kombination aus geringer Wärmeleitfähigkeit bei moderaten Drücken und bei geringen Dichten um 150 g/L.

Dementsprechend besteht das Bedürfnis, Materialien aufzufinden, die auch bei einem Druck oberhalb des Vakuumbereichs und insbesondere bei Normaldruck günstige Wärmeleiteigenschaften aufweisen, und zwar bei gleichzeitig geringen Dichten.

Als Kernmaterialien für Vakuumisolationspaneele können offenzelligen mikro-oder nanozellulären Materialien eingesetzt werden, wobei sich nanozelluläre Kernmaterialien durch eine deutlich geringere Veränderung der Wärmeleitfähigkeit bei einem Druckanstieg, beispielsweise durch Beschädigung Permeation der Wasserdampf und Sauerstoff in die Hülle, auszeichnen. Dadurch wird eine Verlängerung der Wirksamkeitsdauer und eine geringere Sensibilität gegenüber Folienmaterialien erreicht.

Als nanozelluläre Kernmaterialien werden zurzeit überwiegend nanoporöse Kieselsäuren, wie beispielsweise in US 5,480,696 beschrieben, eingesetzt. Nachteilig bei diesen Materialien ist deren Hydrophilie. Für den Einsatz als Kernmaterialien müssen die pulverförmigen Kieselsäuren deshalb entweder hydrophobiert oder aufwendig getrocknet werden.

Nanozelluläre Polymermaterialien auf Basis von Polyurethan, Polyharnstoff oder Melaminharzen sind ebenfalls geeignet (WO2008/138978). Deren Hydrophilie, insbesondere bei den Melaminharzen ist zwar weniger ausgeprägt, aber eine Trocknung ist trotzdem notwendig. Außerdem ist die Synthese über einen Sol-Gel-Prozeß aufwendig und kostenintensiv.

Vakuumisolationspaneelen, welche nanoporöse thermoplastische Polymerschaumstoffe enthalten, sind in der noch unveröffentlichten PCT/EP2011/058238 beschrieben.

Es ist daher die Aufgabe der vorliegenden Erfindung, Vakuumisolationspaneelen und insbesondere Kernmaterialien für Vakuumisolationspaneelen sowie Verfahren zu deren Herstellung zu finden, die die oben genannten Nachteile nicht aufweisen und sich insbesondere einfach und kostengünstig ohne aufwändige Trocknung herstellen lassen.

Demgemäß wurden Vakuumisolationspaneele, enthaltend ein Kernmaterial mit einer Dichte im Bereich von 50 bis 350 kg/m³, gefunden, wobei das Kernmaterial eine Mischung aus
A) 30 bis 100 Gewichtsprozent nanoporösen Polymerteilchen, die eine Zellzahl im Bereich von 1.000 bis 100.000 Zellen/mm aufweisen, wobei mindestens 60 Gewichtsprozent der nanoporösen Polymerteilchen in der Siebanalyse nach DIN 66165 eine Partikelgröße von kleiner als 100 µm aufweisen, und
B) 0 bis 70 Gewichtsprozent pyrogener oder gefällter Kieselsäure enthält.

### Kernmaterial

Das Kernmaterial enthält die Komponenten in den angegebenen Gewichtsanteilen. Bevorzugt besteht es aus den Komponenten A) und B)

Vorzugsweise besteht das Kernmaterial aus einer Mischung aus
A) 25 bis 95 Gewichtsprozent, bevorzugt 30 bis 70 Gewichstprozent der nanoporösen Polymerschaumstoffteilchen und
B) 5 bis 75 Gewichtsprozent pyrogene, bevorzugt 30 bis 70 Gewichtsprozent pyrogener oder
gefällter Kieselsäure.

Die Dichte des Kernmaterials der Vakuumisolationspaneele liegt im Bereich von 50 bis 350 kg/m³, bevorzugt im Bereich von 70 bis 300 kg/m³, besonders bevorzugt im Bereich von 80 bis 250 kg/m³ auf

Das Kernmaterial weist bevorzugt einen Wassergehalt im Bereich von 0,1 bis 1 Gew.-%, besonders bevorzugt im Bereich von 0,1 bis 0,5 Gew.-% auf.

### Komponente A)

Erfindungsgemäß weisen mindestens 60 Gewichtsprozent, bevorzugt mindestens 95 Gewichtsprozent, besonders bevorzugt mindestens 99 Gewichtsprozent der nanoporösen Polymerteilchen in der Siebanalyse nach DIN 66165 eine Partikelgröße von kleiner als 100 µm auf.

Bevorzugt werden Vakuumisolationspaneele bei denen mindestens 50 Gewichtsprozent, bevorzugt mindestens 95 Gewichtsprozent, besonders bevorzugt mindestens 99 Gewichtsprozent der nanoporösen Polymerteilchen (Komponente A) in der Siebanalyse nach DIN 66165 eine Partikelgröße von kleiner als 63 µm aufweisen.

Besonders bevorzugt werden nanoporöse Polymerteilchen eingesetzt, bei denen mindestens 60 Gewichtsprozent der nanoporösen Polymerteilchen (Komponente A) in der Siebanalyse nach DIN 66165 eine Partikelgröße von kleiner als 100 µm und gleichzeitig mindestens 50 Gewichtsprozent nanoporösen Polymerteilchen in der Siebanalyse nach DIN 66165 eine Partikelgröße von kleiner als 63 µm aufweisen.

Als nanoporöse Polymerteilchen können Teilchen aus Polystyrol, Polymethylmethacrylat (PMMA), Polycarbonat, Styrol-Acrylnitril-Copolymere, Polysulfone, Polyethersulfon, Polyetherimid, Polyurethan, Melamin-, Phenol-, Resorzinol-, Harnstoff-Formaldehydharze oder Mischungen davon eingesetzt werden. Bevorzugt werden nanoporöse Polymerteilchen aus Polystyrol, Styrol-Acrylnitril-Copolymere oder Polymethylmethacrylat (PMMA)eingesetzt.

Die nanoporösen Polymerteilchen weisen eine mittlere Zellzahl im Bereich von 1.000 bis 100.000 Zellen/mm, bevorzugt von 2.000 bis 50.000 und besonders bevorzugt von 5.000 bis 50.000 Zellen/mm auf. Die Schaumdichte liegt üblicherweise im Bereich von 50 bis 350 kg/m³, bevorzugt im Bereich von 50 bis 300 kg/m³, besonders bevorzugt im Bereich von 10 bis 250 kg/m³ auf.

Erfindungsgemäß umfasst der Begriff "nanoporös" Porengrößen im Bereich von 5 bis 1000 Nanometern.

Erfindungsgemäß beschreibt der Begriff "mittlere Zellzahl" die Anzahl der Zellen pro mm. Sie kann aus dem mittleren Durchmesser von kreisrunden Schaumzellen mit zu den realen Zellen äquivalenten Querschnittsflächen in typischen Häufigkeits/Größenkurven, wie sie aus Auswertung von mindestens 10 realen Zellflächen von repräsentativen elektronenmikroskopischen Aufnahmen bestimmt werden können, ermittelte werden.

Erfindungsgemäß beschreibt der Begriff "Schaumdichte" oder auch "Dichte" das Masse zu Volumenverhältnis der geschäumten nanoporösen Formmasse, welche nach der Auftriebsmethode bestimmt werden kann oder sich rechnerisch aus dem Quotient Masse zu Volumen eines Formteils ergibt.

Erfindungsgemäß umfasst der Begriff "Formmasse" oder auch "Polymerschmelze" sowohl reine Homo- als auch Copolymere sowie Mischungen von Polymeren. Des Weiteren beinhaltet der Begriff auch Formulierungen, die auf Polymeren und den unterschiedlichsten Additiven beruhen. Beispielhaft sei hier nur auf Prozessadditive wie zum Beispiel Stabilisatoren, Fließhilfsmittel, Farbadditive, Antioxidantien und ähnliche, dem Fachmann bekannte Additive verwiesen.

Die Schäume können geschlossenzellig sein, sind aber vorzugsweise offenzellig. "Geschlossenzellig" bedeutet, dass eine diskontinuierliche Gasphase und eine kontinuierliche Polymerphase vorliegen.

"Offenzellig" bedeutet, dass es sich um ein bi-kontinuierliches System handelt, in dem die Gasphase und die Polymerphase jeweils kontinuierliche Phasen darstellen, wobei die beiden Phasen interpenetrierende Phasen darstellen.

Die nanoporösen Polymerteilchen weisen eine Offenzelligkeit (nach DIN-ISO 4590) von mehr als 40 %, bevorzugt mehr als 50 %, besonders bevorzugt mehr als 75 % auf. Im Idealfall sind mindestens 90 % wenn nicht gar praktisch alle Zellen geöffnet, d.h. das Schaumgerüst besteht nur aus Stegen.

Die erfindungsgemäß eingesetzten, nanoporösen Polymerteilchen können beispielsweise, wie im Folgenden beschrieben, hergestellt werden.

Ein bevorzugtes Verfahren zur Herstellung der nanoporösen Polymerschaumstoffpartikel umfasst die Stufen
a) eine Beladung einer aus thermoplastischen Polymeren gebildeten Polymerschmelze mit einem Treibmittel unter einem Druck und bei einer Temperatur, bei dem sich das Treibmittel im überkritischen Zustand befindet,
b) ein Temperieren der beladenen Polymerschmelze auf eine Temperatur welche im Bereich von - 40 bis + 40 °C um die Glasübergangstemperatur des reinen Polymeren liegt,
c) eine Druckentspannung der in Stufe a) beladenen Polymerschmelze mit einer Druckentspannungsrate im Bereich von 15.000 bis 2000.000 MPa/sec erfolgt, und
d) Zerkleinern des in Stufe c) erhaltenen nanoporösen Polymerschaumstoffes zu Schaumstoffpartikeln mit einem mittleren Partikeldurchmesser im Bereich von 50 bis 500 µm.

Vorzugsweise wird die beladene Polymerschmelze in Stufe a) so temperiert, dass die Temperatur im Moment des Schäumens im Bereich von - 20 bis + 35 °C um die Glasübergangstemperatur der unbeladenen Polymerschmelze liegt. Besonders bevorzugt ist ein Temperaturbereich, der um 0 bis + 30 °C von der Glasübergangstemperatur des reinen Polymers abweicht.

Als Glasübergangstemperatur wird die ermittelbare Glasübergangstemperatur bezeichnet. Die Glasübergangstemperatur kann mittels DSC nach DIN-ISO 11357-2 bei einer Aufheizrate von 20 K/min ermittelt werden.

In der ersten Stufe (Stufe a) wird eine polymere Formmasse (Polymerschmelze) mit einem Gas oder einem Fluid als Treibmittel unter einem Druck und einer Temperatur, bei denen sich das Treibmittel im überkritischen Zustand befindet, beladen.

Als thermoplastische Polymere für die Polymerschmelze können beispielsweise Styrolpolymere, Polyamide (PA), Polyolefine, wie Polypropylen (PP), Polyethylen (PE) oder Polyethylen-Propylen-copolymere, Polyacrylate, wie Polymethylmethacrylat (PMMA), Polycarbonat (PC), Polyester, wie Polyethylenterephthalat (PET) oder Polybutylenterephthalat (PBT), Polysulfone, Polyethersulfone (PES), Polyetherketone, Polyetherimide oder Polyethersulfide (PES), Polyphenylenether (PPE) oder Mischungen davon eingesetzt werden. Besonders bevorzugt werden Styrolpolymere, wie Polystyrol oder Styrol-Acrylnitril-Copolymere oder Polyacrylate wie Polymethylmethacrylat eingesetzt.

Als Polymere eigenen sich insbesondre thermoplastisch verarbeitbare amorphe Polymere, in denen nicht mehr als 3 % kristalline Anteile vorliegen (bestimmt durch DSC).

Als Treibmittel eignen sich feste, gasförmige oder flüssige Treibmittel wie Kohlendioxid, Stickstoff, Luft, Edelgase wie beispielsweise Helium oder Argon, aliphatische Kohlenwasserstoffe wie Propan, Butan, teilweise oder vollständig halogenierte aliphatische Kohlenwasserstoffe, wie Fluorkohlenwasserstoffe, Chlorfluorkohlenwasserstoffe, Difluorethan, aliphatische Alkohole oder Distickstoffoxid (Lachgas), wobei Kohlendioxid, Lachgas und/oder Stickstoff bevorzugt werden. Ganz besonders bevorzugt ist Kohlendioxid.

Das Treibmittel kann direkt überkritisch dosiert und/oder eingespritzt werden, oder die Prozessparameter des zu injizierenden Polymers können zum Zeitpunkt der Injektion in einem Bereich liegen, so dass das Treibmittel unter diesen Bedingungen überkritisch wird. Für CO2 beispielhaft liegt der kritische Punkt bei ungefähr 31.1 °C und 7,375 MPa, für N2O beispielhaft liegt der kritische Punkt bei ungefähr 36,4°C und 7,245 MPa.

Die Treibmittelbeladung der polymeren Formmasse oder Schmelze kann erfindungsgemäß in einer Druckkammer, z.B. einem Autoklav, oder in einer Werkzeugkavität oder in einem Extruder erfolgen. Erfindungsgemäß unbedeutend ist die genaue Temperatur der polymeren Formmasse in dieser Stufe, wobei eine Temperatur über der kritischen Temperatur des Treibmittels und oberhalb der Glasübergangstemperatur der polymeren Formmasse für diesen ersten Beladungsschritt vorteilhaft ist, da die Aufnahme des Treibmittels über Diffusionsprozesse bei Temperaturen oberhalb der Glasübergangstemperatur der polymeren Formmasse beschleunigt ist und somit kürzere Beladungszeiten möglich sind.

Für die Beladung wird ein Druck oberhalb des kritischen Drucks des Treibmittels eingestellt, bevorzugt größer als 10 MPa, besonders bevorzugt größer als 20 MPa. Dieser Beladungsdruck ist für die Generierung einer möglichst hohen Gaskonzentration in der polymeren Formmasse wichtig, und kann im Rahmen der technischen Möglichkeiten heutiger Druckbehälter bis auf 200 MPa eingestellt werden.

In einer Variante kann die Beladung in einem Extruder erfolgten. Bei einer vorteilhaft ausgestalteten Variante ist die Temperatur der polymeren Formmasse im Bereich der Treibmittelinjektion oberhalb der Glasübergangstemperatur der Formmasse, so dass sich das Treibmittel sehr gut und schnell in der Schmelze verteilen und lösen kann. Der Injektionssdruck wird hierbei generell höher eingestellt als der Schmelzedruck in diesem Bereich. In einer besonders vorteilhaften Ausführung wird der Injektionsdruck über ein Druckhalteventil auf einen konstanten hohen Wert eingestellt. Hierbei wird erfindungsgemäß ein Treibmittelmassestrom eingestellt, welcher bezogen auf den Massestrom der polymeren Formmasse 1 bis 60 Gew.-%, insbesondere 5 bis 50 Gew.-% betragen kann. Die Obergrenze für die Treibmittelbeladung stellt hierbei die bei den Parametern Druck und Temperatur der beladenen Schmelze vor der Düse erreichbare Sättigungskonzentration dar, welche entweder empirisch im Prozess oder mittels gravimetrischer Methoden ermittelt werden kann.

In einer zweiten Stufe (Stufe b) der Verfahren wird nun die beladene polymere Formmasse unter Aufrechterhaltung des Beladungsdrucks größer 10 MPa, bevorzugt größer 20 MPa, auf eine Temperatur abgekühlt, welche zwischen -40 und +40°C, bevorzugt zwischen -20 und +35°C, besonders bevorzugt zwischen 0 und 30°C um die mittels DSC nach DIN-ISO 11357-2 bei einer Aufheizrate von 20 K/min ermittelbare Glasübergangstemperatur der unbeladenen polymeren Formmasse liegt.

In einer Ausführung des Verfahrens im Autoklav kann diese Anpassung der Temperatur der polymeren Formmasse nach Aufbringen des Beladungsdrucks erfolgen. Alternativ kann diese Temperatur auch bereits vor Aufbringen des Beladungsdruckes eingestellt sein. In beiden Verfahrensvarianten ist auf eine ausreichende Zeit zur Homogenisierung der Temperatur zu achten, insbesondere nach Injektion des kalten Treibmittels in die Kavität. Des Weiteren muss bei diesen Verfahrensvarianten auf eine ausreichende Zeit zum Erreichen der Sättigungskonzentration über Diffusion geachtet werden, insbesondere bei größeren Volumina der polymeren Formmasse.

In einer weiteren Variante im Extruder wird die beladene Formmasse kontinuierlich abgekühlt. Hierbei können alle dem Fachmann bekannten Apparate von einem Kühlextruder bis hin zu Mischern und Kühlern in beliebiger Anzahl und Kombination eingesetzt werden. Um den Druck in der beladenen Formmasse aufrecht zu erhalten, kann der Einsatz von Schmelzepumpen zur Druckerhöhung angebracht sein, welche ebenfalls in beliebiger Anzahl und Position in den Prozess eingebracht werden können. Hierin liegt auch ein Vorteil der erfindungsgemäßen Ausführung begründet, dass nämlich ein segmenthafter Aufbau der Verfahrensstrecke eine große Kontrolle über die lokalen Parameter Druck und Temperatur bietet und eine schnelle und homogene Abkühlung der beladenen Formmasse unter Druck erfolgen kann. Bedingung ist jedoch, dass durch eine ausreichende Verweilzeit und Durchmischung eine homogene Verteilung der Treibmittelmoleküle erfolgt und das Treibmittel vollständig in der polymeren Formmasse gelöst werden kann.

Eine rapide Druckentspannung der beladenen und temperierten polymeren Formmasse in der dritten Stufe (Stufe c) führt zu stabilen nanoporösen Polymerschaumstoffen mit geringer Dichte.

In einer dritten Stufe (Stufe c) erfolgt eine Druckentspannung der in Stufe a) mit Treibmittel beladenen und in Stufe b) temperierten Polymerschmelze mit einer Druckentspannungsrate im Bereich von 15.000 bis 2.000.000 MPa/sec. Die Druckentspannungsrate bezieht sich auf den Drucksprung, der innerhalb eines Zeitraums von einer Sekunde vor dem Aufschäumen stattfindet. Dabei beträgt der Druckabfall mindestens 10 MPa.

Der Druck vor der Entspannung kann über einen Drucksensor bestimmt werden. Üblicherweise wird auf Atmosphärendruck entspannt. Es kann aber auch ein leichter Überdruck oder Unterdruck angelegt werden. In der Regel erfolgt der Druckabfall sprunghaft innerhalb von 0,1 bis 10 ms. Die Druckentspannungsrate kann beispielsweise durch Anlegen einer Tangente im Bereich des stärksten Druckabfalls im Druck-Temperatur-Diagramm ermittelt werden.

In der kontinuierlichen Ausführungsform mittels Extruder wird die Druckentspannungsrate üblicherweise über die Form der Düse eingestellt. In der Regel wird hierzu eine Düse mit mindestens einem Düsenabschnitt, welcher vorzugsweise eine Länge von 1 bis 5 mm und einen Querschnitt von 0,1 - 25 mm2 aufweist, verwendet.

Durch Einstellen einer Druckentspannungsrate im Bereich von 15.000 bis 2.000.000 MPa/s, bevorzugt im Bereich von 30.000 bis 1.000.000 M Pa/s, besonders bevorzugt im Bereich von 40.000 bis 500.000 MPa/s kann eine polymere Formmasse mit sehr hoher Treibmittelkonzentration und dementsprechend geringer Viskosität auch bei homogenen Schäumtemperaturen oberhalb der Glasübergangstemperatur der nicht-beladenen Formmasse zu einer nanoporösen Schaummorphologie mit gleichzeitig deutlich geringerer Schaumdichte hergestellt werden. Es hat sich gezeigt, dass in einigen Fällen Druckentspannungsraten bis 200.000 MPa/s ausreichend sein können. In diesen Fällen kann das Verfahren vereinfacht ausgeführt werden.

Diese dritte Stufe (Stufe c) kann in den unterschiedlichen Verfahrensvarianten auf unterschiedliche Art und Weise realisiert werden. In einer Variante im Autoklav kann die erfindungsgemäße Druckentspannungsrate wahlweise über schnell schaltende Ventile oder über das kontrollierte Ansprechen von Druckentspannungsvorrichtungen wie zum Beispiel einer Berstscheibe gewährleistet werden. In einer erfindungsgemäßen Variante in einer Werkzeugkavität kann die Druckentspannungsrate über schnelle Vergrößerung der Kavität erfolgen.

In der bevorzugten Ausführung in einem Extruder wird die Druckentspannungsrate durch die Förderleistung des Extruders sowie die Düsengeometrie gewährleistet.

Weiterhin betrifft die vorliegende Erfindung andere, dem sachkundigen Fachmann geläufige technisch umsetzbare Apparate und Methoden zur Herstellung derartiger nanoporöser Polymerschaumstoffe durch die oben beschriebene erfindungsgemäße rapide Druckentspannung einer erfindungsgemäß temperierten polymeren Formmasse.

Je nach verwendeter Düsengeometrie können besonders im Extrusionsprozess Schaumstrukturen und letztlich Polymerschaumstoffe in verschiedener Gestalt hergestellt werden. In bevorzugten Ausführungen des erfindungsgemäßen Verfahrens werden Vollprofile, beispielsweise Platten oder auch Hohlprofile hergestellt.

In einer ebenfalls bevorzugten Ausgestaltung des Verfahrens wird der Polymerschaumstoff in einem weiteren Verfahrensschritt (optionale Stufe d) zu Formkörpern in Gestalt von geschäumten Polymerpartikeln, -granulaten, oder-pulvern zerkleinert, z.B. mittels einer Trennscheibe, eines Granulators, einer Klinge, eines Schlagmessers oder einer Mühle. Der Zerkleinerungsschritt kann dabei bevorzugt im direkten Anschluss an die Druckentspannung angeschlossen sein, kann aber auch getrennt zu einem späteren Zeitpunkt durchgeführt werden. Hierbei kann es vorteilhaft sein, den Polymerschaumstoff abzukühlen, beispielsweise mittels Eiswasser, Trockeneis oder flüssigem Stickstoff.

Die Zerkleinerung in Stufe d) kann ein- oder mehrstufig, in letztgenanntem Fall in einer oder in mehreren unterschiedlichen Vorrichtungen erfolgen. Beispielsweise kann der nanoporöse Polymerschaumstoff zunächst einer Vorzerkleinerung und anschließend einer Nachzerkleinerung unterzogen werden. Eine Nachzerkleinerung kann vorteilhafterweise in einer Schneidmühle oder einer Fließbettgegenstrahlmühle erfolgen. Bevorzugt weisen die Schaumstoffpartikeln nach dem Zerkleinern einen mittleren Partikeldurchmesser im Bereich von 10 µm bis 10 mm, besonders bevorzugt im Bereich von 50 µm bis 0.5 mm auf.

Als Vorrichtung zum Zerkleinern kommen insbesondere Schneckenzerkleinerer, Rotorscheren, Ein- und Mehrwellenzerkleinerer, Walzenmühlen, Feinmühlen, Feinmahlanlagen, Prallscheibenmühlen, Hammermühlen und Fließbettgegenstrahlmühlen in Betracht.

Verfahren und Vorrichtungen zur Zerkleinerung von organischen Materialien sind dem Fachmann weitläufig bekannt. Der Fachmann wählt eine geeignete Vorrichtung in Abhängigkeit von der zu zerkleinernden Menge, dem erwünschten Durchsatz, der zu erzielenden Partikelgröße und der Sprödigkeit des eingesetzten Materials

Bei der späteren Anwendung sind auch die Rieselfähigkeit in der Schüttung und die niedrige Dichte des nanoporösen Polymerschaumstoffs im gepressten Zustand ein großer Vorteil. Ein weiterer Vorteil der Schüttungen sind die kontrolliert einstellbaren Partikeldurchmesser sowie deren Größenverteilung durch Wahl des Zerkleinerungsverfahrens.

Die nanoporösen Polymerteilchen können als solche oder in Mischung mit weiteren funktionalen Komponenten als Wärmedämmstoffe eingesetzt werden. Ein Wärmedämmstoff ist demzufolge eine Abmischung enthaltend die nanoporösen Polymerschaumstoffe. Die Auswahl geeigneter funktionaler Komponenten als Zusatzstoffe hängt vom Anwendungsgebiet ab.

Die Erfindung betrifft Vakuumisolationspaneele enthaltend die nanoporösen Polymerschaumstoffe sowie die Verwendung der nanoporösen Polymerschaumstoffe zur Wärmedämmung. Vorzugsweise werden die erhältlichen Materialien für die Wärmedämmung insbesondere in Bauten, oder zur Kälteisolation insbesondere im mobilen, logistischen oder im stationären Bereich verwendet, zum Beispiel in Kühlgeräten oder für mobile Anwendungen.

Mögliche weitere Komponenten dieser Wärmedämmstoffe sind beispielsweise Verbindungen, die Wärmestrahlen im Infrarotbereich, insbesondere im Wellenlängenbereich zwischen 3 und 10 µm absorbieren, streuen und/oder reflektieren können. Sie werden allgemein als Infrarot-Trübungsmittel bezeichnet. Die Partikelgröße dieser Teilchen beträgt vorzugsweise von 0,5 bis 15 Mikrometer. Beispiele für derartige Substanzen sind insbesondere Titanoxide, Zirkonoxide, Ilmenite, Eisentitanate, Eisenoxide, Zirkonsilikate, Siliciumcarbid, Manganoxide, Graphite und Russ.

Zur mechanischen Verstärkung können Fasern als Zusatzstoffe eingesetzt werden. Diese Fasern können anorganischen oder organischen Ursprungs sein. Beispiele für anorganische Fasern sind vorzugsweise Glaswolle, Steinwolle, Basalt-Fasern, Schlacken-Wolle, keramische Fasern, die aus Schmelzen von Aluminium und/oder Siliciumdioxid sowie weiteren anorganischen Metalloxiden bestehen, und reine Siliciumdioxidfasern wie z. B. Silica-Fasern. Organische Fasern sind vorzugsweise z. B. Cellulosefasern, Textilfasern oder Kunststofffasern. Zum Einsatz kommen folgende Dimensionen: Durchmesser vorzugsweise 1-12 Mikrometer, insbesondere 6-9 Mikrometer; Länge vorzugsweise 1-25 mm, insbesondere 3-10 mm.

### Komponente B)

Aus technischen und wirtschaftlichen Gründen können der Mischung anorganische Füllmaterialien zugesetzt werden. Zum Einsatz kommen vorzugsweise verschiedene, synthetisch hergestellte Modifikationen von Siliciumdioxid wie z. B. pyrogene Kieselsäure, gefällte Kieselsäuren, Lichtbogenkieselsäuren, SiO2-haltige Flugstäube, die durch Oxidationen von flüchtigem Siliciummonoxid, bei der elektrochemischen Herstellung von Silicium oder Ferrosilicium entstehen. Ebenso Kieselsäuren, die durch Auslaugen von Silikaten wie Calziumsilikat, Magnesiumsilikat und Mischsilikaten wie z. B. Olivin (Magnesium-Eisensilikat) mit Säuren hergestellt werden. Ferner kommen zum Einsatz natürlich vorkommende SiO₂-haltige Verbindungen wie Diatomeenerden und Kieselguren. Ebenfalls können zur Anwendung kommen: thermisch aufgeblähte Mineralien wie vorzugsweise Perlite und Vermiculite. Je nach Bedarf können vorzugsweise feinteilige Metalloxide wie vorzugsweise Aluminiumoxid, Titandioxid, Eisenoxid zugesetzt werden.

Bevorzugt wird als Komponente B) pyrogene Kieselsäure mit einer spezifischen Oberfläche nach BET von 90 bis 500 m²/g und einer mittleren Primärpartikelgröße im Bereich von 5 bis 30 nm eingesetzt.

Die pyrogene Kieselsäure weist bevorzugt einen Wassergehalt im Bereich von 0,1 bis 1 Gew.-%, besonders bevorzugt im Bereich von 0,1 bis 0,5 Gew.-% auf.

Die Erfindung betrifft auch ein Verfahren zur Herstellung der oben beschriebenen Vakuumisolationspaneele bei dem eine Mischung der Komponenten A) und gegebenenfalls B) sowie weitere Bestandteile des Kernmaterials in eine Hülle gefüllt wird und der gefüllte Hülle anschließend evakuiert und verschweißt wird. Als Hülle wird bevorzugt ein Polymerfilm, welche eine metallische Beschichtung aufweist, besonders bevorzugt eine metallisierte Polyethylentherephtalatfolie eingesetzt.

Die Abmischung der Komponenten A) und B) sowie gegebenenfalls weiterer Komponenten für das Kernmaterial kann generell in diversen Mischaggregaten stattfinden. Bevorzugt kommen jedoch Planetenmischer oder Rhönradmischer zur Anwendung. Hierbei ist es vorteilhaft, die Fasern zuerst mit einem Teil der zweiten Mischkomponenten als eine Art Masterbatch vorzumischen, um damit ein vollständiges Aufschließen der Fasern zu gewährleisten. Nach dem Faseraufschluss erfolgt die Zugabe des größten Teils der Mischkomponenten.

Nach Beendigung des Mischprozesses kann das Schüttgewicht der Mischung je nach Art und Menge der Komponenten zwischen vorzugsweise 40-180 kg/m³, bevorzugt 40-120 kg/m³, betragen. Die Rieselfähigkeit der resultierenden porösen Mischung ist sehr gut, so dass sie problemlos und homogen zu Platten verpresst u. a. auch z. B. in die Hohlräume von Hohlbausteinen eingefüllt und verpresst werden kann. Beim Verpressen zu Platten kann durch Festlegung auf bestimmte Plattenstärken, über das Gewicht, die Dichte und infolge dessen auch die Wärmeleitzahl des Dämmstoffes wesentlich beeinflusst werden.

Der Einsatz der nanoporösen Polymerschaumstoffe als Kern-Wärmedämmstoff in Vakuumisolationspanelen erlaubt das Einstellen einer optimalen Kombination aus Wärmeleitfähigkeit bei niedrigem Druck, Lebensdauer und geringer Dichte in Abhängigkeit der Parameter Zellgröße und Schaumdichte sowie der eingestellten Partikelgröße und Partikelgrößenverteilung. Als Kernmaterialien eingesetzt werden können die nanoporösen Polymerschaumstoffe direkt als lose Schüttung oder als verpresste Formkörper.

Die erfindungsgemäßen Vakuumisolationspaneele eignen sich insbesondere zur Wärmedämmung im Fahrzeugbau. Hierdurch können beispielsweise flächige Innenverkleidungsteile für den Fahrzeugbau hergestellt werden, die günstige Wärmedämmeigenschaften aufweisen. Es hat sich als besonders vorteilhaft herausgestellt, hierfür die erfindungsgemäßen pulverförmigen Materialien zu verwenden, da die entsprechenden Fahrzeugteile hohen Ansprüchen in Bezug auf eine komplexe Form beziehungsweise in Bezug auf einen komplexen Aufbau genügen müssen.

Die so hergestellten Vakuumpanels sind insbesondere dort von großer Bedeutung, wo aus Platzgründen nur geringe Dämmstärken möglich sind; beispielsweise im Automobilsektor, im Kühlschrankbereich oder bei der Renovierung von Gebäuden.

### Beispiele

### Einsatzstoffe:

- PMMA 6N:: PMMA Plexiglas 6N von Evonik Röhm GmbH mit einer Glasübergangstemperatur von ca. 102°C (gemessen mit DSC nach ISO 11357-2, Heizrate: 20K/min )
pyrogener Kieselsäure: Aerosil 300 von Evonik Degussa GmbH (spezifische Oberfläche 300 ± 30 m²/g (BET) und einer mittleren Primärteilchengröße von 7 nm

### Herstellung eines nanoporösen Polymerschaumstoffes auf Basis von PMMA

Ein nanoporöser Polymerschaumstoff mit niedriger Dichte wurde in einem kontinuierlichen Extrusionsverfahren hergestellt.

Hierbei wurde als polymere Formmasse ein PMMA Plexiglas 6N der Firma Evonik Röhm GmbH wie geliefert eingesetzt. In Stufe 1 wurde die polymere Formmasse in einem Extruder (Leistritz 18 mm) bei einem Durchsatz von 2,26 kg/h aufgeschmolzen und homogenisiert. Im direkten Anschluss an die Plastifizierung der polymeren Formmasse wurde überkritisches CO₂ mit einem Druck von ungefähr 475 bar in die Formmasse bei einer Schmelzetemperatur von ca. 220°C injiziert. Hierfür wurde ein Massestrom von ungefähr 0,780 kg/h CO₂ eingestellt, woraus sich eine Beladung von ungefähr 34,5 Gew.-% bezogen auf die Masse Polymer ergibt.

Die beladene Formmasse wurde dann über Misch- und Kühlelemente auf eine Temperatur von ca. 103°C vor der Düse abgesenkt. Der Druck entlang der Prozessstrecke nach der Treibmittelinjektion wurde durch Einsatz von Schmelzepumpen über einem Mindestwert von 350 bar gehalten.

Durch Extrusion der beladenen Formmasse unter diesem Druck und diesem Gesamtmassestrom durch eine Runddüse mit 0,5 mm Durchmesser und einer Länge von 1,8 mm konnte eine erfindungsgemäße Druckentspannungsrate im Bereich von 80.000 MPa/s der erfindungsgemäß temperierten polymeren Formmasse eingestellt werden.

Es ergab sich in diesem Verfahren ein kontinuierlich extrudierter optisch homogener, lichtdurchlässiger nanoporöser Polymerschaumstoff mit einer mittleren Schaumdichte von ungefähr 200 kg/m³ und einem mittleren Zelldurchmesser von ungefähr 100 nm. Der Polymerschaumstoff hatte ein bläuliches Erscheinungsbild im Auflicht und schien leicht rötlich im Durchlicht.

### Mahlung

Die erhaltenen, nanoporösen Polymerschaumstoffstränge auf Basis von PM MA wurden mit Hilfe einer Fließbettgegenstrahlmühle (Firma Hosokawa Alpine,Typ AFG 200) zu Pulvern gemahlen. Die Mahlung wurde bei Umgebungstemperatur ohne Versprödung des Materials durchgeführt.

Zur Charakterisierung des gemahlenen PM MA-Schaumes wurde die Lichtstrahlsiebung mit der Siebmaschine Rhewum LPC 200 LC (V = 40 m³/h, n = 20 Upm, lonisator 10 kV) verwendet. Die hierfür wichtigen Siebpunkte wurden bei 63 µm und 100 µm festgelegt. Die Siebanalyse wurde nach DIN 66165 durchgeführt. Bei einer Drehzahl von 6000 min⁻¹ wurde folgender Partikelgrö-βeverteilung erreicht:

| Siebfraktion | Gewichtsanteil |
|---|---|
| < 63 µm | 53% |
| 63 µm - 100 µm | 14%, |
| > 100 µm | 33 % |

### Mischen

Die Mischungen aus dem gemahlenen nanoporösen Polymerschaumstoff mit der pyrogenen Kieselsäure wurden mit Hilfe vom Rhönradmischer Typ RRM 200 von Fa. J. Engelsmann AG bei der Mischzeit von 6 Stunden mit Mahlkugeln hergestellt.

### Herstellung von Vakuumisolationspaneelen

Zur Herstellung der Vakuumisolationspaneele wurden die verschiedenen nanozellulären Pulver in handelsübliche, mehrfach metallisierte PET Barrierefolie gefüllt, anschließend 20 min lang evakuiert und gasdicht verschweißt. Bei sämtlichen Versuchen wurden exakt die gleiche Folien, die gleiche Evakuiermaschine (Fa. The vac company^{®}) und die gleichen Evakuierbedingungen eingestellt.

Die Maße der Vakuumpaneels betrug jeweils 20X20X1,5 cm. Die Messung der Wärmeleitfähigkeit wurde bei 10°C nach DIN 52612 durchgeführt.

Die Wassergehalte wurden nach Rückwaage bestimmt. Die VIPs wurden nach den Wärmeleitfähigkeitsmessungen geöffnet und das Kernmaterial gewogen. Dann wurde der Kern bei 110°C in einem Vakuumtrockenschrank 3 h getrocknet und erneut gewogen. Aus der Massedifferenz lässt sich der Wassergehalt im VIP mit der Genauigkeit 0,3 Gew.% ermitteln.

Als Füllstoff für die Vakuumisolationspaneelen wurden die folgenden nanozellulären Pulver eingesetzt:
- P1:: Pyrogene Kieselsäure Aerosil 300, nicht getrocknet
- P2:: Pyrogene Kieselsäure Aerosil 300, getrocknet
- P3: gemahlene nanoporösen Polymerschaumstoffstränge auf Basis von PM MA, hergestellt wie oben beschrieben
- P4: Mischung aus 50 Gew.-%, gemahlenen nanoporösen Polymerschaumstoffstränge (P3) auf Basis von PMMA, hergestellt wie oben beschrieben und 50 Gew.% nicht getrockneter pyrogener Kieselsäure (P1)

**Tabelle 1: Eigenschaften der Vakuumisolationspaneelen**

| Beispiel | Füllung | Dichte des Kernmaterials [kg/m3] | Wassergehalt des Kernmaterials [Gew.-%] | WLF [mW/mK] |
|---|---|---|---|---|
| 1 (Vergleich) | P1 | 180 | 10,0 | 9 |
| 2 | P2 | 160 | 0,5 | 4 |
| 3 | P3 | 180 | 0,1 | 4 |
| 4 | P4 | 180 | 5,0 | 5 |

Durch Verdampfung des Wassers aus der pyrogenen Kieselsäure und dadurch entsehenden Druckanstieg im Paneel zeigt Vergleichsbeispiel 1 eine hohe Wärmeleitfähigkeit (WLF).

Beispiel 4 zeigt, dass bis zu einem Gewichtsanteil von 50 % an den gemahlenen nanoporösen Polymerschaumstoffsträngen keine Trocknung der Pulvermischung aus den gemahlenen nanoporösen Polymerschaumstoffsträngen und nicht getrockneter pyrogener Kieselsäure notwendig ist.

## Patentansprüche

1. Vakuumisolationspaneele, enthaltend ein Kernmaterial mit einer Dichte im Bereich von 50 bis 350 kg/m³, **dadurch gekennzeichnet, dass** das Kernmaterial eine Mischung enthaltend
A) 30 bis 100 Gewichtsprozent nanoporösen Polymerteilchen, die eine Zellzahl im Bereich von 1.000 bis 100.000 Zellen/mm aufweisen, wobei mindestens 60 Gewichtsprozent der nanoporösen Polymerteilchen in der Siebanalyse nach DIN 66165 eine Partikelgröße kleiner als 100 µm aufweisen, und
B) 0 bis 70 Gewichtsprozent pyrogener oder gefällter Kieselsäure enthält.

2. Vakuumisolationspaneele nach Anspruch 1, **dadurch gekennzeichnet, dass** mindestens 50 Gewichtsprozent der nanoporösen Polymerteilchen in der Siebanalyse nach DIN 66165 eine Partikelgröße von kleiner als 63 µm aufweisen.

3. Vakuumisolationspaneele nach Anspruch 1 oder 2, **dadurch gekennzeichnet, dass** das Kernmaterial aus einer Mischung
A) 25 bis 95 Gewichtsprozent der nanoporösen Polymerschaumstoffteilchen und
B) 5 bis 75 Gewichtsprozent pyrogener oder gefällter Kieselsäure besteht.

4. Vakuumisolationspaneele nach einem der Ansprüche 1 bis 3, **dadurch gekennzeichnet, dass** das Kernmaterial einen Wassergehalt im Bereich von 0,1 bis 5 Gew.-% aufweist.

5. Vakuumisolationspaneele nach einem der Ansprüche 1 bis 4, **dadurch gekennzeichnet, dass** die nanoporösen Polymerteilchen aus Polystyrol, Polymethylmethacrylat (PMMA), Polycarbonat, Styrol-Acrylnitril-Copolymere, Polysulfone, Polyethersulfon, Polyetherimid, Polyurethan, Polyharnstoff, Melamin-, Phenol-, Resorzinol-, Harnstoff-Formaldehydharze oder Mischungen davon bestehen.

6. Verfahren zur Herstellung einer Vakuumisolationspaneele gemäß einem der Ansprüche 1 bis 5, **dadurch gekennzeichnet, dass** eine Mischung der Komponenten A) und B) in eine Barrierefolie gefüllt wird und die gefüllte Barrierefolie anschließend evakuiert und verschweißt wird.

7. Verfahren nach Anspruch 6, **dadurch gekennzeichnet, dass** als Komponente B) pyrogene Kieselsäure mit einer spezifischen Oberfläche nach BET von 90 bis 500 m²/g und einem mittleren Primärpartikelgröße im Bereich von 5 bis 30 nm eingesetzt wird.
